# EUROPEAN PATENT SPECIFICATION

(11) **EP 1 177 098 B1**
(45) Date of publication and mention of the grant of the patent: **11.04.2012**
(21) Application number: 98956089.1
(22) Date of filing: 01.10.1998
(51) Int. Cl.: B29C 67/00

(54) **METHOD FOR THREE-DIMENSIONAL MODELING**
METHODE ZUR DREI-DIMENSIONALEN MODELLIERUNG
PROCEDE DE CREATION DE MODELES TRIDIMENSIONNELS

(43) Date of publication of application: 06.02.2002
(73) Proprietor: STRATASYS INC., Eden Prairie, Minnesota 55344-2020 (US)
(72) Inventor: BATCHELDER, John, Samuel, Somers, NY 10589 (US); CARABELLO, Vincent, Lagrangeville, NY 12540 (US)
(74) Representative: Larcher, Dominique
(86) International application number: PCT/US1998/020516
(87) International publication number: WO 2000/020215

(56) References cited:
- EP-A- 0 606 627
- EP-A- 0 655 317
- US-A- 5 141 680
- US-A- 5 402 351
- US-A- 5 402 351
- US-A- 5 833 914
- 'Producing Three-Dimensional Parts from Computer Design Data' IBM TECHNICAL DISCLOSURE BULLETIN vol. 33, no. 5, October 1990, pages 146 - 147, XP002916448

## Description

### BACKGROUND OF THE INVENTION

Rapid prototyping machines are used for realizing three dimensional computer aided design (CAD) mathematical models as tangible solid models. These solid models are used for functions including aesthetic judgments, proofing the CAD model, forming hard tooling, interference and space allocation studies, and functional testing.

There are a host of criteria for gauging the quality of a model generated by a rapid prototyping system. Examples of these criteria include the model's dimensional accuracy, the cost of the modeling material, the ease of use of the rapid prototyping machine, the ability of the rapid prototyping machine to produce arbitrary model geometries, the strength of the modeling material, and the aesthetic appeal of the model. The criteria addressed by this invention are primarily the speed with which the model is made, the cost of the material consumed in making the model, the cost of the rapid prototyping machine, and the time required to finish the model after it is produced by the rapid prototyping machine.

It is the rule rather than the exception that support structures must be co-deposited with the rapid prototype part under construction. The primary purpose of support structures is to temporarily anchor portions of the rapid prototype that will be permanently attached to the rest of the rapid prototype through additional portions of the rapid prototype that will subsequently be deposited. For example, if the rapid prototype is a model of the interior of a subterranean cave and the cave rapid prototype is constructed from the floor towards the ceiling, then a stalactite will require a temporary support until the ceiling is completed. Support structures may be required for other reasons, such as allowing the rapid prototype to be removed from a build platform, resisting a tendency for the partially completed rapid prototype to deform, and resisting forces applied to the partially completed rapid prototype by the construction process.

As just described, a part feature analogous to a stalactite requires support structures to be previously deposited. Clearly a part feature analogous to a stalagmite can generally be constructed without support structures. This invention relates to the special case of a feature which is not supported from the bottom (as the stalagmite is) but which is supported from the side, or which is laterally supported. A shelf cantilevered from a wall is a good example of a laterally supported feature. Generally rapid prototyping systems that create parts by sequentially extruding thermoplastic beads or roads require support structures under most of a laterally supported feature.

While supports are generally necessary they are nevertheless undesirable. Their removal requires an additional processing step which may or may not be compatible with automation. When supports are created by thermoplastic extrusion, their deposition consumes extra time and part building material. The surface of the rapid prototype is generally marred where it contacts the support structure.

U.S. Patent 4,749,347 describes a rapid prototyping system which sequentially deposits thermally solidifiable material using a moving extrusion head. Material is deposited by vertical lamination and lateral casting.

U.S. Patents 5,121,329 and 5,340,433 describe rapid prototyping systems which sequentially deposit flowable thermally solidifiable material using a moving extrusion head. Material is deposited by vertical lamination and by dispensing into free space above a base plate or substrate to which it is bonded in several locations.

U.S. Patent 5,141,680 describes a rapid prototyping system which sequentially deposits flowable thermally solidifiable material using a moving extrusion head. Material is deposited by vertical lamination.

U.S. Patents 5,303,141 and 5,402,351 describe improvements on a rapid prototyping device which sequentially deposits thermally solidifiable material using a moving extrusion head. Material is deposited by vertical lamination; figures showing bridging and shelving geometries are shown.

U.S. Patent 5,529,471 describes a rapid prototyping system which sequentially deposits thermally solidifiable material using a moving extrusion head. Material is deposited by vertical lamination and by flooding.

Japanese Patent 64-78822 describes a three dimensional molding device which sequentially deposits solidifiable material using a moving extrusion head. A variety of deposition geometries are described, including arrays of spheroids and a nap of hair.

IBM Technical Disclosure Bulletin "Producing three-dimensional parts from computer design data", Vol. 33, No.5, pp. 146-7 describes a rapid prototyping device which sequentially deposits thermally solidifiable material using a moving extrusion head. Material is deposited by vertical lamination and by bridging or cantilevering from an existing structure.

International Patent WO 92/18323 describes a rapid prototyping system which can excrete thermoplastic materials as one mode of its operations. Material is deposited by vertical lamination.

Japanese Patent 62-255124 describes a rapid prototyping system which sequentially deposits thermally solidifiable material using a moving extrusion head. Material is deposited by vertical lamination.

### BRIEF SUMMARY OF THE INVENTION

The primary objective of this invention is to reduce the amount of support structure required by a part created from a rapid prototyping machine that deposits roads or beads of thermoplastic, thereby increasing the rapidity of the rapid prototyping process, reducing the cost of the rapid prototype, and improving the surface finish of the rapid prototype.

A further objective of this invention is to allow lateral features of the rapid prototype to be constructed with little or no support structure.

A further objective of this invention is to utilize inexpensive 3 axis positioning of the thermoplastic extruder while reducing the amount of support structure required by a part.

A further objective of this invention is to optimize the choice of extrudable thermoplastic material to allow lateral features of the rapid prototype to be constructed with little or no support structure.

A further objective of this invention is to optimize the shape and temperature of the thermoplastic extruder orifice to allow lateral features of the rapid prototype to be constructed with little or no support structure.

The method of the present invention forms a laterally supported feature of the three-dimensional object by sequentially extruding adjacent beads of a flowable and solidifiable material. When a laterally supported feature is to be formed, a hub bead is first vertically laminated over a vertically supported region. The hub bead is the last supported bead from which a laterally supported feature (such as a shelf) is built. It is the only supported bead against which the horizontal or laterally supported feature is formed.

The deposited hub bead is cooled to form a solidified hub bead. A shelf bead is then laterally laminated to the solidified hub bead, so that the shelf bead (which is not vertically supported from below adheres adjacent to and laterally offset from the solidified hub bead. The shelf bead is then cooled to form a solidified shelf bead. Next, another shelf bead is laterally laminated to the solidified shelf bead, so that the next shelf bead adheres adjacent to and laterally offset from the solidified shelf bead. This process of depositing adjacent shelf beads is continued until the laterally supported feature is complete.

### BRIEF DESCRIPTION OF THE DRAWINGS

FIG. 1a shows vertical laminating of a bead onto an existing solidified bead.
FIG. 1b shows lateral laminating of a bead adjacent to an existing solidified bead.
FIG. 2 shows a laterally supported shelf feature.
FIG. 3a shows a cross section view of an extruder and an existing solidified bead, showing the overlap of the footprint of the extruded bead with the solidified bead.
FIG. 3b shows a plan section view of an extruder and an existing solidified bead, showing the overlap of the footprint of the extruded bead with the solidified bead.
FIG. 4 shows a cross section of the extruder orifice in the process of making lateral laminations. The mechanical cross section of the exterior of the orifice mates with the previously solidified bead.
FIG. 5a shows zero die swell of a Newtonian fluid emerging from an orifice.
FIG. 5b shows negative die swell of a fluid emerging from an orifice.
FIG. 5c shows positive die swell of a fluid emerging from an orifice.
FIG. 6a shows the die swell associated with an extruder with a thermally isolated orifice.
FIG. 6b shows the increase in die swell of the apparatus of FIG. 6a when a cold sink is applied to the thermally isolated portion of the orifice.
FIG. 7a shows a bead created with a cross sectional area smaller than the cross section of the extruder orifice by translating the extruder relatively quickly over a substrate.
FIG. 7b shows a bead created with a cross sectional area equal to the cross section of the extruder orifice by translating the extruder at a nominal velocity over a substrate.
FIG. 7c shows a bead created with a cross sectional area larger than the cross section of the extruder orifice by translating the extruder relatively slowly over a substrate.
FIG. 8a shows the failure of lateral lamination when there is insufficient overlap of the footprint of the extruded bead with the previously solidified bead.
FIG. 8b shows droop in lateral lamination when the final position of the extruded bead is below that of the previously solidified bead.
FIG. 9a shows successful lateral lamination.
FIG. 9b shows curl in lateral lamination when the final position of the extruded bead is above that of the previously solidified bead.
FIG. 10a shows a shelf test structure.
FIG. 10b shows a layer (with its hub and spoke supports) immediately below the shelf test structure of FIG 10a.
FIG. 11a shows a layer of a part with a supported region, several unsupported regions, and several hubs.
FIG. 11b shows a layer immediately below the layer shown in FIG. 11a.
FIG. 12 shows a perforated supported layer below a hub.
FIG. 13 shows a bridge spanning two supported regions.

### DETAILED DESCRIPTION

This invention applies to rapid prototyping systems that accumulate a physical part by sequentially depositing planar layers, and wherein each layer is formed by extruding a solidifying material in continuous beads, roads, or ribbons. We use the term bead for an extrusion which is roughly cylindrically symmetric. We use the term road for an extrusion along an axis where the extrusion cross section in the plane normal to the axis has orthogonal maximum and minimum dimensions that differ at least by a factor of two.

Practical considerations require that extrusions start and stop. We use the term continuous to mean that the length of an extrusion is typically more than twice the cross sectional dimension of an extrusion.

In the most preferred embodiment the rapid prototyping system will extrude a thermoplastic material. In less preferred embodiments the rapid prototyping system can extrude thermosetting, crystallizing, and chemically reacting materials. For clarity and without loss of generality we refer to the layers which are accumulated to form the rapid prototype as each being horizontal, and that the axis of the symmetry of the extruder is vertical. This is the most preferred geometry, however in a less preferred geometry the extruder is at a random orientation and is normal to each of the layers.

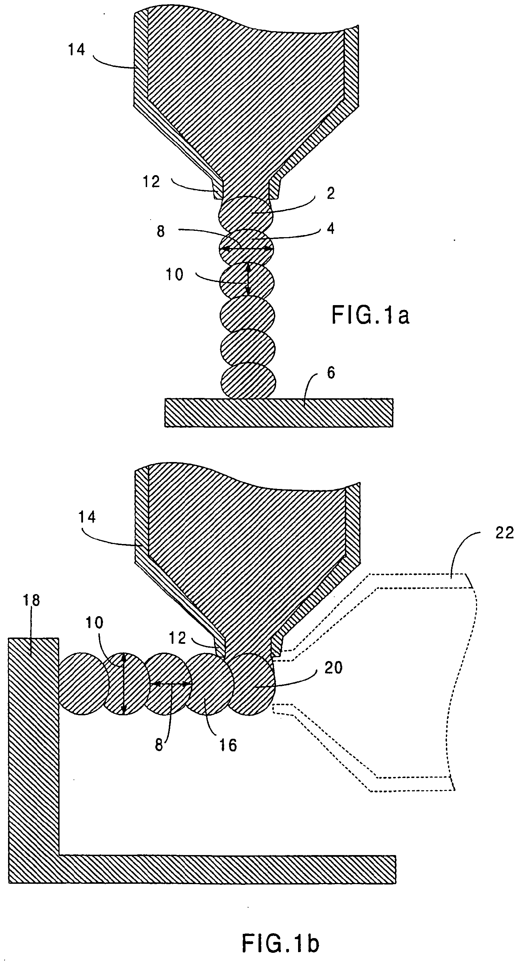

In FIG. 1a we show vertical lamination. Flowable thermoplastic from an extruder (14) emerges from an orifice (12) to form a bead (2) on a previously solidified supporting bead (4). The action of extruding the material flattens the bead so that its horizontal dimension (8) is at least as large as its vertical dimension (10). Vertical laminations are shown forming a wall structure on a support plate (6). When the flowable thermoplastic is pressed in intimate contact with the previously solidified support bead and allowed to cool, it solidifies and develops an adhesive bond to the previously solidified bead.

In FIG. 1b we show lateral lamination. Flowable thermoplastic emerges from an orifice (12) to form a shelf bead (20) adjacent to a previously solidified bead (16). Lateral laminations are shown forming a shelf cantilevered from a support plate (18). As will be described in more detail later, the action of extruding is to push the shelf bead (20) passed the previously solidified bead (16) and to cause the lateral feature to fail. A combination of natural die swell, footprint overlap, and thermal die swell presses the shelf bead (20) against the solidified bead (16), causing its horizontal dimension (8) to be less than its vertical dimension (10).

In the most preferred geometry, the extruder orifice is cylindrically symmetric, and the extruder is translated with three linear degrees of freedom with respect to the workspace containing the part under construction. The lateral lamination process which we will describe can be implemented by imparting additional degrees of freedom of motion to the extruder. For example, in FIG. 1b if the nozzle is rotated to a horizontal orientation (22) then the lateral structure can be made with the same extrusion process as vertical lamination.

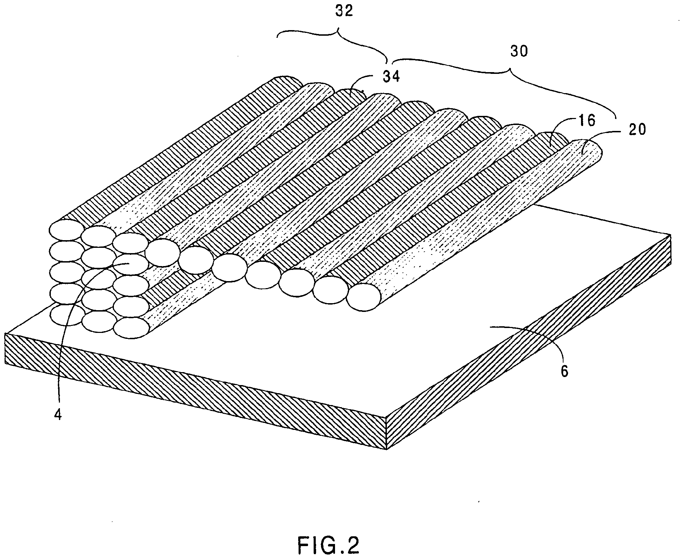

In FIG. 2 we show a portion of a shelf structure. The figure shows a section of a longer feature in which the beads continue past the ends shown in the figure. The shelf (30) is composed of laterally laminated beads that are cantilevered from a supported region (32) of vertically laminated beads. The vertically supported bead (34) that joins the shelf to the supported region is the "hub bead". Shelf (30) is formed against and supported from hub bead (34).

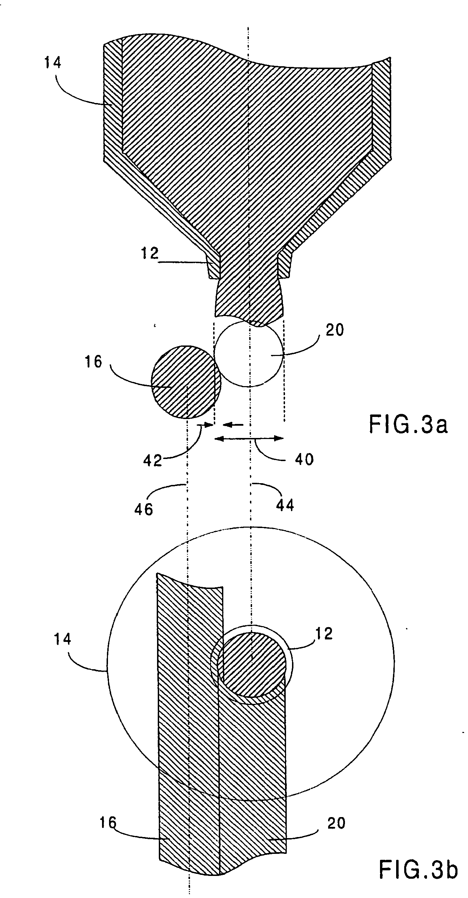

The main challenge of the process of lateral lamination is to find ways to press the extruded bead (20) against the previously solidified laterally adjacent bead (16). In FIGs. 3a and 3b we show cross section and plan views of a necessary element of this process. The lateral dimension of the extruded bead (40) should be large enough and the centerline of the extruder (44) should be close enough to the centerline of the previously solidified laterally adjacent bead (46) that there is an overlap (42) between the footprint of the extruded bead and the previously solidified laterally adjacent bead. If this overlap (42) gets too small, for example less than 5 percent of the lateral dimension of the extruded bead (40), then the beads do not laminate properly, leading to shelves drooping and failing. If this overlap (42) gets too large, for example more than 40 percent of the lateral dimension of the of the extruded bead (40), then the beads adhere properly but they pile or curl up instead of forming a lateral feature.

If the lateral dimension of the extruded bead (40) is 10 mils or 0.010 inches, changing the relative positions of the extruder centerline (44) and the centerline of the previously solidified bead (46) by 1 mil changes the footprint overlap by 10 percent. In a less preferred embodiment the positioning accuracy of the extruder is made to be sufficient to maintain the correct footprint overlap (42). In the more preferred embodiments additional process elements are used to relax the required positioning accuracy.

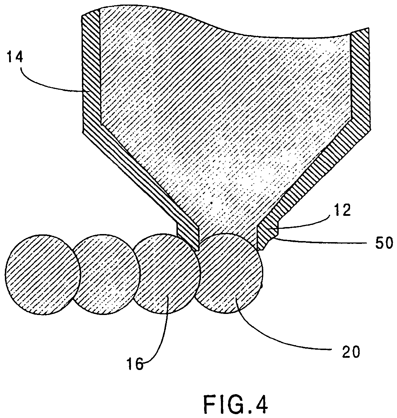

In FIG. 4 we show a detail of an extruder tip (12), the exterior (50) of which has been formed as a guide to align the previously solidified bead (16) so that its centerline (46) is aligned with respect to the centerline of the extruder (44) to produce the desired footprint overlap (42). Since the beads can have any azimuthal orientation, the exterior (50) should be axially symmetric about the extruder axis (44). The amount of movement of the previously solidified bead (16) by the exterior (50) of the extruder tip is typically larger in the direction z than in the lateral (x or y) direction. The distortion is usually elastic and is a few mils in size.

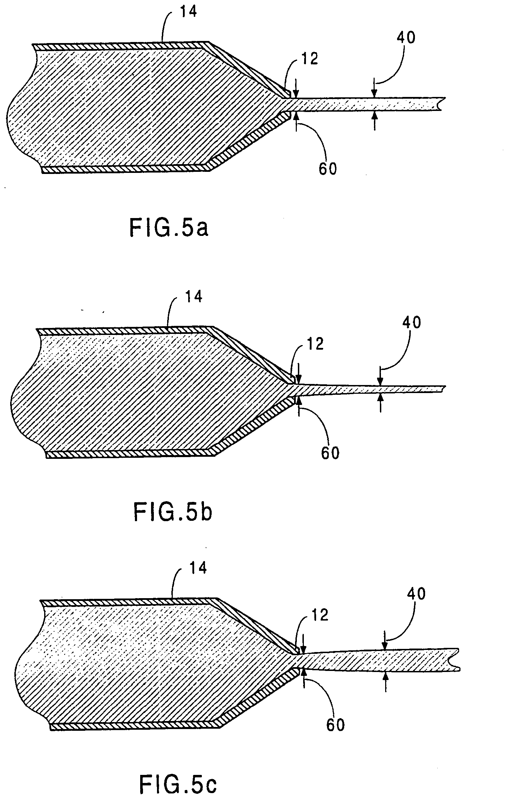

In FIGs. 5a-5c we show the effect of polymeric die swell on the lateral dimension (40) of an extruded bead. Die swell or extrudate swell is the actual lateral dimension (40) divided by the physical diameter (60) of the extruder orifice. To measure the die swell of a typical thermoplastic without also measuring thermal and gravitometric effects, the extrudate should emerge from the orifice into a hot oil bath at the same temperature and with the same density as the extrudate. A uniform jet as shown in FIG. 5a has a die swell of one Newtonian fluids like water have a die swell of less than one for Reynolds numbers greater than 16, as shown in FIG. 5b, and that asymptotically approaches 0.75. Newtonian fluids have a die swell greater than 1 for Reynolds numbers less than 16, as shown in FIG. 5c, and that asymptotically approach 1.13. The length scale in the Reynolds number is the physical diameter (60) of the extruder orifice. Non-Newtonian fluids like most thermoplastics generally have higher die swells, with values being reported up to 3. An extruder tip with a converging orifice tends to increase the die swell, and a diverging orifice tends to decrease die swell. Decreasing the flow rate out of the orifice tends to increase the die swell.

Die swell is beneficial for lateral lamination because the ballooning of the extruded bead as it emerges from the orifice tends to press the extruded bead against the previously solidified bead. As previously described, the natural die swell of a polymer can be enhanced by using a constricting orifice and by using slow extrusion rates. The choice of polymer used as the extrudate has the strongest impact on the die swell, however numerous other requirements on the properties of the extruded polymer do not always allow the use of a high die swell polymer.

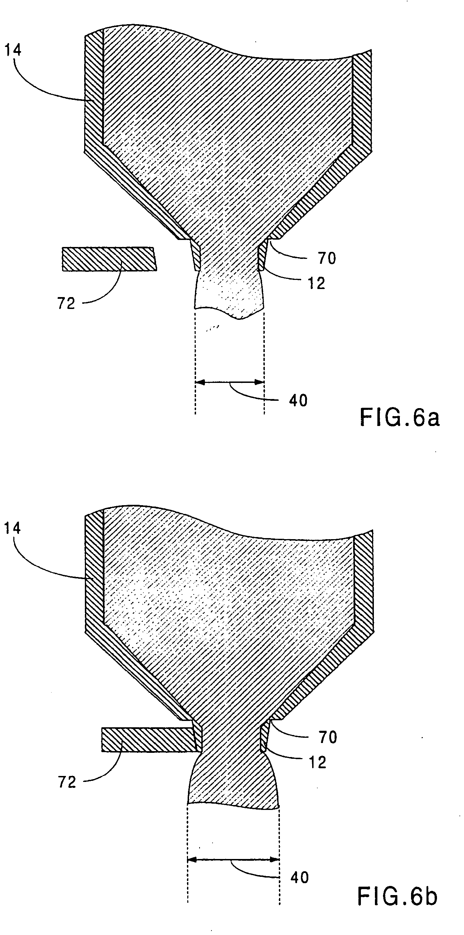

FIG. 6a and 6b show a way to thermally enhance the apparent die swell of the polymer to improve lateral lamination. FIG. 6a shows an extruder (14) producing an extruded bead with a diameter (40). Upstream of the tip (12) of the extruder is a thermally resistive section (70) which mechanically connects the tip (12) with the rest of the extruder (14), and which provides resistance to the flow of heat from the extruder (14) to the tip (12). When the tip is not touching other cooler objects such as a cooling block (72), the heat flow from the extruder (14) through the thermally resistive section (70) to the tip (12) maintains the tip (12) at nearly the same temperature as the extruder (14), and the extrudate emerges from the tip at a uniform initial temperature. If a cooling block (72) contacts the tip (12) below the thermally resistive section (70), as shown in FIG. 6b, the temperature of the tip (12) is reduced, and the extrudate emerges from the tip with a relatively cooler surface compared to its core. The cooler surface has a higher viscosity than the core, so that the core extrudate material in the tip (12) tends to flow more quickly than the surface material, causing the extruded bead to have a larger size (40) than in the absence of the cooling block (72).

In the most preferred embodiment the last two mechanisms are conveniently combined. The tip has an exterior surface that rests against the previously extruded bead, and has a thermally resistive section upstream of the tip. While laterally laminating, the previously solidified bead (16) serves the function of the cooling block (72) by extracting heat from the tip, and the previously solidified bead (16) is also deflected by the tip to the position of the correct footprint overlap.

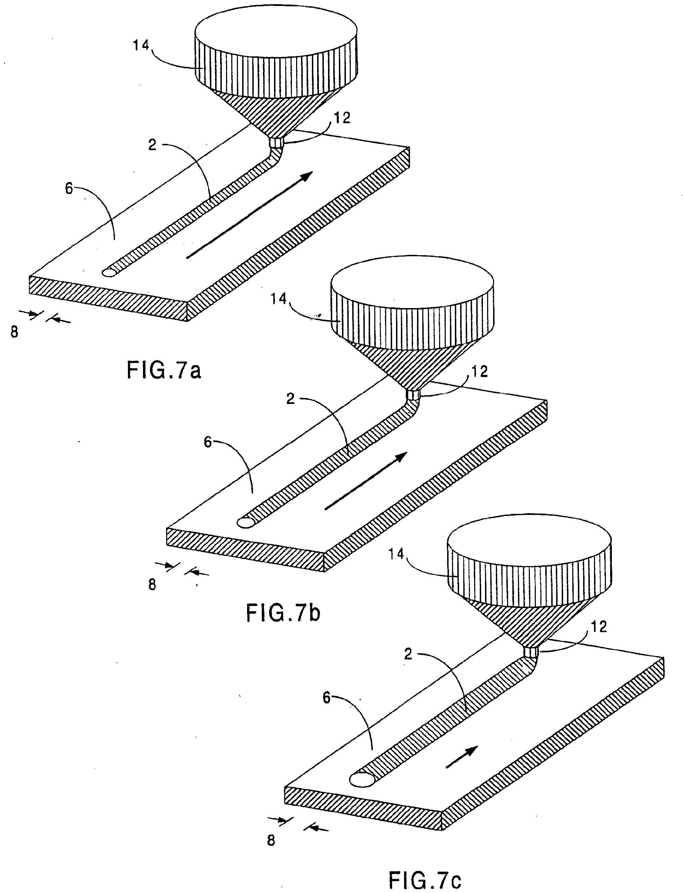

We have so far discussed the following components of the process of lateral lamination: footprint overlap, mechanical deflection, polymeric die swell, and thermal die swell. FIGs.7a-7c shows over-extrusion die swell, which is another way to develop a force to press the extruded bead against its laterally adjacent previously solidified bead. In all three figures an extruder (14) is forcing the same flow rate of material through a tip (12) of the same inner diameter, creating a bead (2) on a supporting substrate (6). The horizontal velocity of the tip (12) is the fastest in FIG. 7a and is the slowest in FIG. 7c. The diameter (8) of the extruded bead gets larger as the horizontal speed of the extruder tip (12) slows down. In a similar manner, a bead being laterally laminated can be made to swell and press against its previously solidified neighbor by extruding relatively more flow rate through the tip at a given tip horizontal velocity.

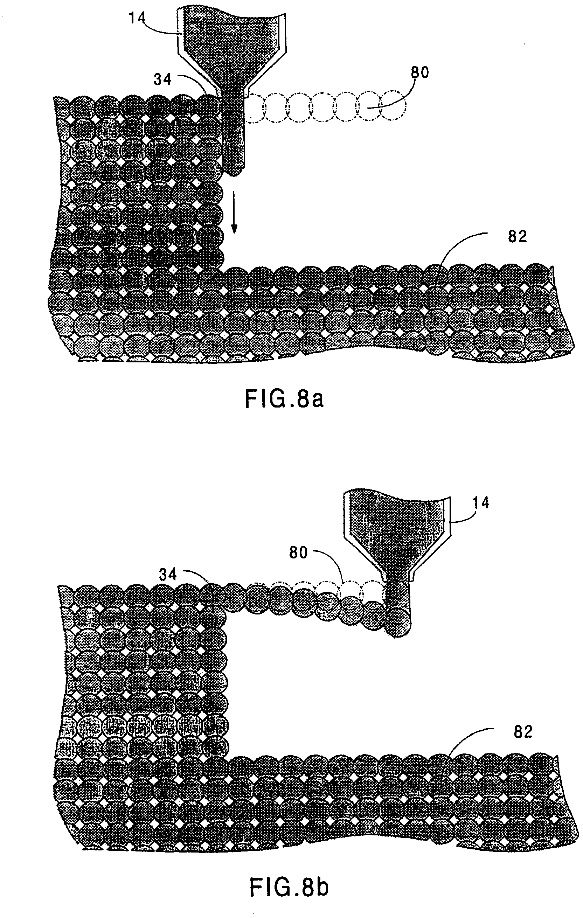

FIG. 8a shows a cross section of a lateral feature (80) to be added to a rapid prototype under construction (82). In this case the extruder (14) is positioned so that the footprint overlap between the extruded bead and the hub bead (34) is too small, and the lateral lamination process fails immediately.

FIG. 8b shows a cross section of a lateral feature (80) to be added to a rapid prototype under construction (82). In this case the extruder (14) is positioned so that the footprint overlap between the extruded bead and the hub bead (34) is correct, but the lateral feature droops from its desired position due to insufficient polymeric die swell, thermal die swell, and/or over-extrusion die swell.

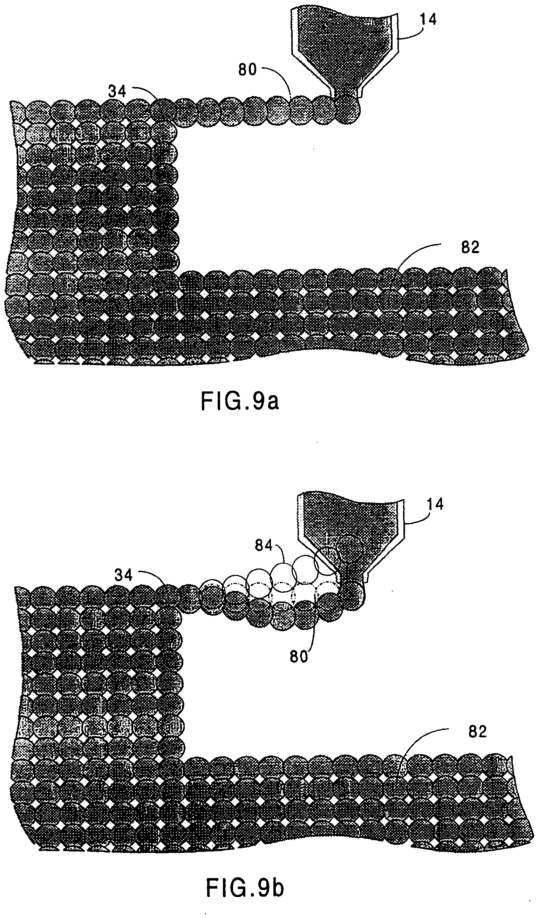

FIG. 9a shows a cross section of a lateral feature (80) to be added to a rapid prototype under construction (82). In this case the extruder (14) is positioned so that the footprint overlap between the extruded bead and the hub bead (34) is correct, and the lateral feature is in its desired position due to sufficient polymeric die swell, thermal die swell, and over-extrusion die swell.

FIG. 9b shows a cross section of a lateral feature (80) to be added to a rapid prototype under construction (82). In this case at least one of the components of the lateral lamination process is excessive; that component could be the footprint overlap between the extruded bead and the hub bead (34), or the polymeric die swell, or the thermal die swell, or the over-extrusion die swell. In the presence of the tip the extruded lateral feature will curl down because it is being pushed down by the mechanical restoring function of the tip; in the absence of the tip the lateral feature will curl up (84) because the extruded bead is adhering too high up on the previously solidified bead.

Rapid cooling of the extruded bead improves the reliability of the lateral laminating process. Mechanisms that have been found to improve lateral lamination by enhanced cooling include blowing air on the extruded material, reducing the ambient temperature of the build environment, using black extrudate (to increase its infrared emissivity), and adding thermally conductive particulates (to increase the thermal conductivity of the extrudate). In preferred embodiments of the present invention, a fan is used to cool laterally laminated beads quickly so that they do not sag.

The exterior shape of the nozzle does not need to exactly mate with the shape of the surface of the previous bead in order to obtain the alignment and cooling advantages of contact with the previous bead. The material of the previous bead will conform about a nozzle whose surface is an approximation to the shape of the previous bead.

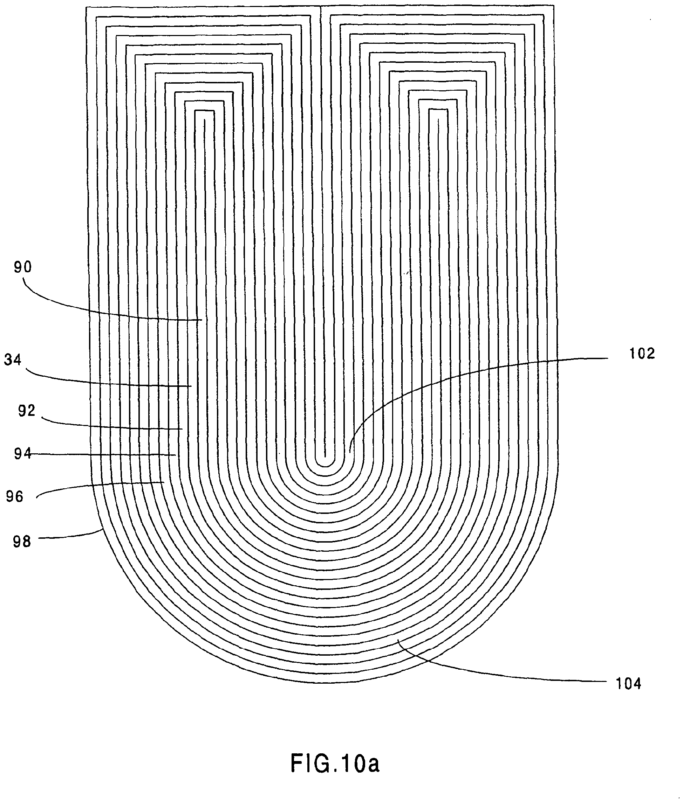

FIG. 10a shows a top plan view of the geometric positions of beads for a shelf test structure. A central supported bead (90) is vertically laminated first. A hub bead (34) is vertically laminated next. Hub bead 34 is the last vertically supported bead from which shelf beads are attached. A shelf bead (92) is laterally laminated to the hub bead (34) next. A second shelf bead (94) is laterally laminated to the first shelf bead (92). A third shelf bead (96) is laterally laminated to the second shelf bead (94), and the lateral laminating is repeated through the last shelf bead (98).

The process parameters for lateral lamination depend on the radius of curvature of the bead being deposited. For example, if there is insufficient process latitude the convex arcs (104) located laterally outside of shelf bead 34 will tend to droop while the concave arcs (102) located laterally inside shelf bead 34 will tend to curl up. We have seen that this can be cured by invoking additional process steps, particularly by using thermal die swell.

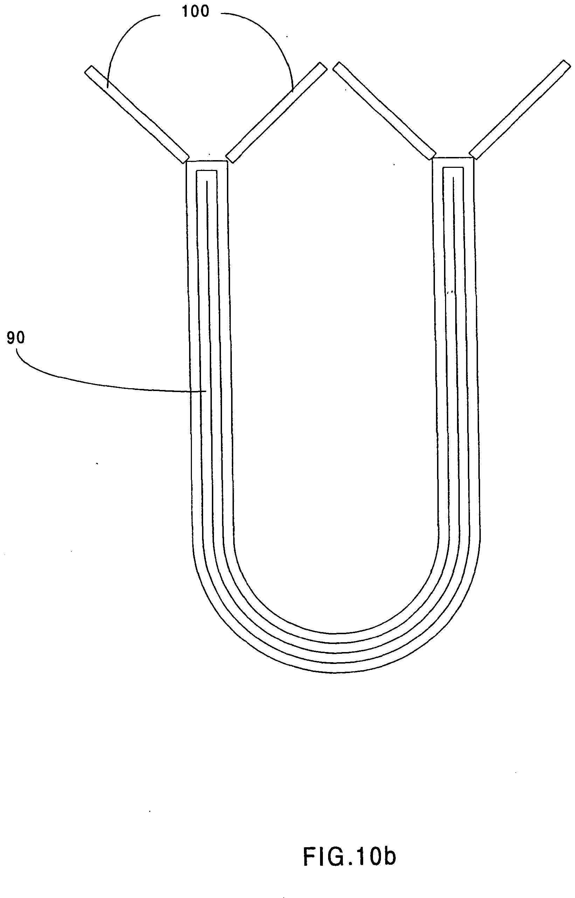

If the radius of curvature of the deposited bead is very small, such as an abrupt angle or an bead start or stop, we have found that the shelf bead usually needs vertical support in those specific regions. In FIG. 10b we show spoke supports (100) under the abrupt angle portions of the trajectories. Also, FIG. 10b shows beads (90) which provide vertical support below bead (90) and hub bead (34) of FIG. 10a.

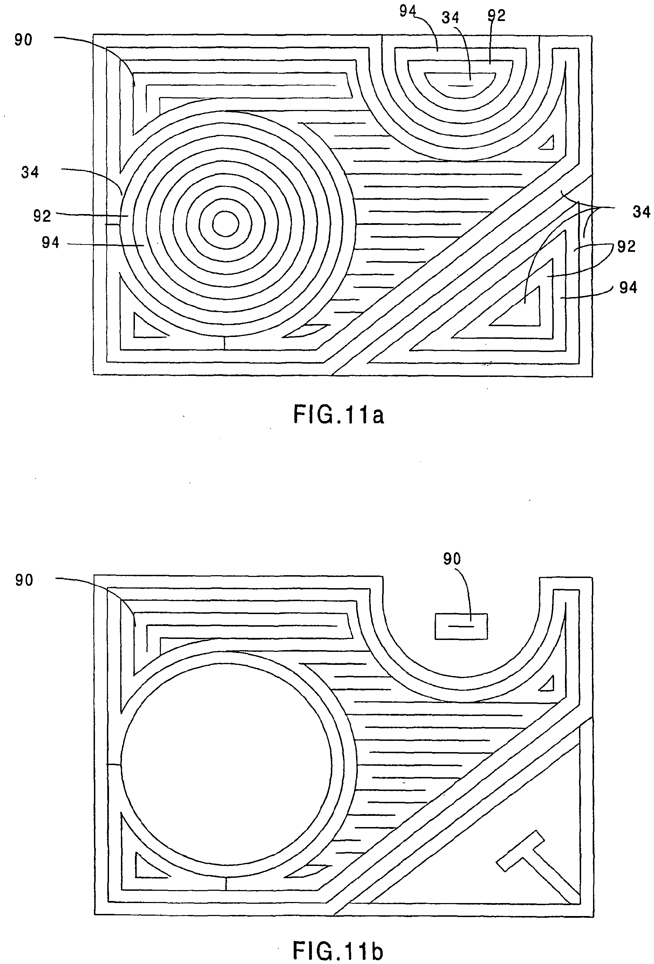

FIG. 11a shows a top plan view of a more typical example of lateral lamination used in part building. Most of the beads 90 are vertically supported and laminated. Some vertically supported beads form hub beads (34) to attach the first shelving beads (92), second shelving beads (94), and others as necessary. Notice that the hub beads (34) can be just on the perimeter of a lateral feature, or just in the interior of a lateral feature, or a combination of the two. Note also that a shelving bead (92, 94, etc.) can be extruded between two previously solidified shelving beads.

FIG. 11b shows a top plan view of the layer immediately below the layer shown in FIG. 11a. The vertical support for beads 90 and hub beads 34 can be seen by comparing FIGs. 11a and 11b.

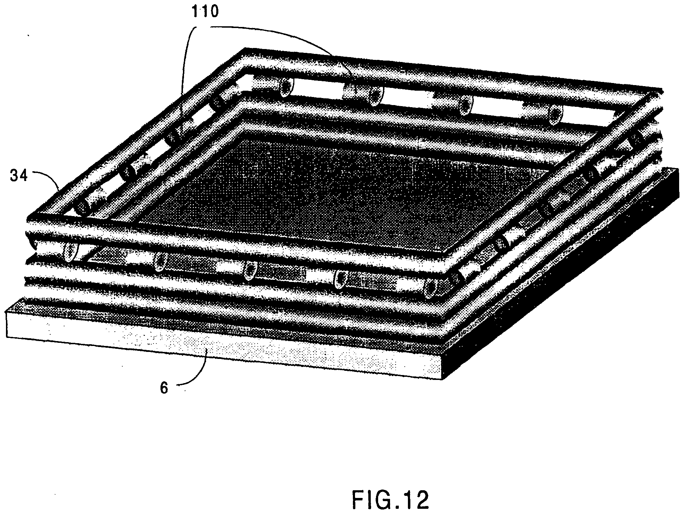

FIG. 12 shows a perspective view of the use of perforations (110) or short vertically laminated bead segments to support hub beads (34) or shelving beads. Perforations are only used in the interface layer between added support structures and the prototype under construction. They have the advantage of aiding the removal of supports, and they reduce the blemishes on the part surface produced by the supports. Shelving beads (not shown) are attached to hub bead 34, as in previous FIGs.

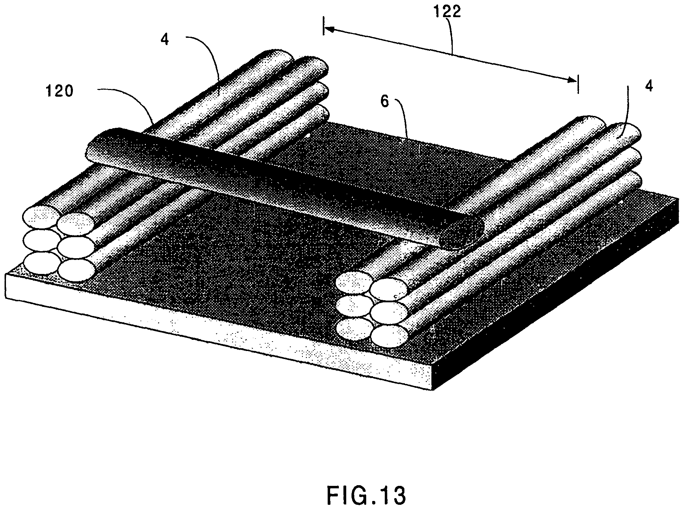

FIG. 13 shows a perspective view of a bridging bead (120) spanning two supported regions composed of vertically laminated beads (4). A particular extrusion material and extrusion process will have a characteristic bridging distance (122) which it will span with acceptable droop in mid-span.

A presently preferred embodiment of the present invention and many of its improvements have been described with a degree of particularity. It should be understood that this description has been made by way of preferred example, and that the invention is defined by the scope of the following claims.

## Claims

1. A method of forming a laterally supported feature (80) of a three dimensional object by sequentially extruding adjacent beads of a flowable and solidifiable material, the laterally supported feature (80) comprising a series of adjacent and laterally offset beads, each bead having a vertical (10) and a lateral dimension (40), a portion of the laterally supported feature (80) covering a vertically supported region (90), the method comprising the steps of:
a) vertically laminating a hub bead (34) over the vertically supported region (90);
b) cooling the hub bead (34) to form a solidified hub bead (34);
c) laterally laminating a shelf bead (92) to the solidified hub bead (34), the shelf bead (92) adhering adjacent to and laterally offset from the solidified hub bead (34) and having a vertical dimension (10) at least 10 percent greater than its lateral dimension (40);
d) cooling the shelf bead (92) to form a solidified shelf bead (92);
e) laterally laminating a next shelf bead (94) to the solidified shelf bead (92), the next shelf bead (94) adhering adjacent to and laterally offset from the solidified shelf bead (92) and having a vertical dimension (10) at least 10 percent greater than its lateral dimension (40), wherein there is a footprint overlap (42) between the next shelf bead (94) and the solidified shelf bead (92), the footprint overlap (42) being greater than five percent and less than thirty percent of the lateral dimension (40) of the next shelf bead (94); and
f) repeating steps d) and e) until the laterally supported feature (80) is complete.

2. The method of claim 1, wherein the vertical dimension (10) of the solidified shelf bead (92) is between 15 percent and 50 percent larger than the lateral dimension (40) of the solidified shelf bead (92).

3. The method of claim 1, wherein the beads of flowable and solidifiable material issue from a cylindrically symmetric tip (12).

4. The method of claim 3, wherein the cylindrically symmetric tip (12) has an exterior (50), a portion of the exterior (50) of the cylindrically symmetric tip (12) mechanically mating with the solidified shelf bead (92).

5. The method of claim 4, wherein laminating a next shelf bead (94) to a solidified shelf bead (92) further comprises contacting the solidified shelf bead (92) with the mechanically mating portion of the exterior of the cylindrically symmetric tip (12), whereby the cylindrically symmetric tip (12) is cooled by the solidified shelf bead (92) and the exterior of the next shelf bead (94) issuing from the cylindrically symmetric tip (12) is cooled as it issues from the cylindrically symmetric tip (12).

6. The method of claim 5, wherein the cylindrically symmetric tip (12) has an upstream thermally resistive section (70), which resists heat flow to the tip (12).

7. The method of claim 4, wherein laminating a next shelf bead (94) to a solidified shelf bead (92) further comprises contacting and deflecting a position of the solidified shelf bead (92) with the mechanically mating portion of the exterior (50) of the cylindrically symmetric tip (12), whereby the next shelf bead (94) is laminated at a desired lateral and vertical position with respect to the solidified shelf bead (92).

8. The method of claim 7, wherein the cylindrically symmetric tip (12) is cooled by the solidified shelf bead (92) and the exterior of the next shelf bead (94) issuing from the cylindrically symmetric tip (12) is cooled as it issues from the cylindrically symmetric tip (12).

9. The method of claim 1, wherein the flowable and solidifiable material is chosen to have a positive die swell of at least 1.1.

10. The method of claim 1, wherein the next shelf bead (94) is laminated to the solidified shelf bead (92) at a vertical position with respect to the solidified shelf bead (92) above the desired final position.

11. The method of claim 10, wherein cooling further comprises sagging of the next shelf bead (94) with respect to the solidified shelf bead (92), whereby the vertical dimension (10) of the next shelf bead (94) is increased with respect to the lateral dimension (40) of the next shelf bead (94), and a vertical position of the next shelf bead (94) drops to a desired final position.

12. The method of claim 1, wherein the solidified hub bead (34) is a closed loop.

13. The method of claim 12, wherein the shelf bead (92) is deposited inside of the solidified hub bead (34).

14. The method of claim 12, wherein the shelf bead (92) is deposited outside of the solidified hub bead (34).

15. The method of claim 1, wherein a portion of the vertically supported region (90) comprises previously solidified support material, the support material being incorporated into the three dimensional object to provide support for the hub bead (34).

16. The method of claim 1, wherein the shelf bead (92) is deposited over both a vertically supported region (90) and over a vertically unsupported region.

17. The method of claim 16, wherein a portion of the vertically supported region (90) comprises previously solidified support material, the support material being incorporated into the three dimensional object to provide support for high curvature regions of the shelf bead (92).

18. The method of claims 15 or 17, wherein a portion of the previously solidified support material is formed with perforations (110), whereby the previously solidified support material can be readily removed when the three dimensional object is complete.

19. The method of claim 1 wherein cooling the shelf bead (92) includes blowing air on the shelf bead (92) to enhance cooling rate.

## Patentansprüche

1. Verfahren zum Bilden eines seitlich abgestützten Bestandteils (80) eines dreidimensionalen Objekts durch sequenzielles Strangpressen angrenzender Wülste aus einem fließfähigen und verfestigbaren Material, wobei der seitlich abgestützte Bestandteil (80) eine Reihe von angrenzenden und seitlich versetzten Wülsten umfasst, wobei jede Wulst eine senkrechte (10) und eine seitliche (40) Dimension aufweist, wobei ein Teil des seitlich abgestützten Bestandteils (80) einen senkrecht abgestützten Bereich (90) bedeckt, wobei das Verfahren folgende Schritte umfasst:
a) senkrechtes Laminieren einer Nabenwulst (34) über den senkrecht abgestützten Bereich (90);
b) Abkühlen der Nabenwulst (34), um eine verfestigte Nabenwulst (34) zu bilden;
c) seitliches Laminieren einer Regalwulst (92) an die verfestigte Nabenwulst (34), wobei die Regalwulst (92) neben der verfestigten Nabenwulst (34) und dazu seitlich versetzt haftet und eine senkrechte Dimension (10) aufweist, die um mindestens 10 Prozent größer ist als ihre seitliche Dimension (40);
d) Abkühlen der Regalwulst (92), um eine verfestigte Regalwulst (92) zu bilden;
e) seitliches Laminieren einer nächsten Regalwulst (94) an der verfestigten Regalwulst (92), wobei die nächste Regalwulst (94) neben der verfestigten Regalwulst (92) und dazu seitlich versetzt haftet und eine senkrechte Dimension (10) aufweist, die um mindestens 10 Prozent größer ist als ihre seitliche Dimension (40), wobei es eine Platzüberlappung (42) zwischen der nächsten Regalwulst (94) und der verfestigten Regalwulst (92) gibt, wobei die Platzüberlappung (42) mehr als fünf Prozent und weniger als dreißig Prozent der seitlichen Dimension (40) der nächsten Regalwulst (94) beträgt; und
f) Wiederholen der Schritte d) und e), bis der seitlich abgestützte Bestandteil (80) fertiggestellt ist.

2. Verfahren nach Anspruch 1, wobei die senkrechte Dimension (10) der Verfestigten Regalwulst (92) zwischen 15 Prozent und 50 Prozent größer ist als die seitliche Dimension (40) der verfestigten Regalwulst (92).

3. Verfahren nach Anspruch 1, wobei die Wülste aus fließfähigem und verfestigbarem Material aus einem zylindrisch symmetrischen Mundstück (12) herauskommen.

4. Verfahren nach Anspruch 3, wobei das zylindrisch symmetrische Mundstück (12) eine Außenseite (50) aufweist, wobei ein Teil der Außenseite (50) des zylindrisch symmetrischen Mundstücks (12) mechanisch zu der verfestigten Regalwulst (92) passt.

5. Verfahren nach Anspruch 4, wobei das Laminieren einer nächsten Regalwulst (94) an einer verfestigten Regalwulst (92) ferner das Kontaktieren der verfestigten Regalwulst (92) mit dem mechanisch passenden Teil der Außenseite des zylindrisch symmetrischen Mundstücks (12) umfasst, wodurch das zylindrisch symmetrische Mundstück (12) durch die verfestigte Regalwulst (92) abgekühlt wird, und die Außenseite der nächsten Regalwulst (94), die aus dem zylindrisch symmetrischen Mundstück (12) herauskommt, abgekühlt wird, während sie aus dem zylindrisch symmetrischen Mundstück (12) herauskommt.

6. Verfahren nach Anspruch 5, wobei das zylindrisch symmetrische Mundstück (12) einen vorgeschalteten wärmebeständigen Abschnitt (70), der dem Wärmefluss bis zum Mundstück (12) widersteht, aufweist.

7. Verfahren nach Anspruch 4, wobei das Laminieren einer nächsten Regalwulst (94) an einer verfestigten Regalwulst (92) ferner das Kontaktieren und Ablenken einer Position der verfestigten Regalwulst (92) mit dem mechanisch passenden Teil der Außenseite (50) des zylindrisch symmetrischen Mundstücks (12) umfasst, wodurch die nächste Regalwulst (94) in einer gewünschten seitlichen und senkrechten Position im Verhältnis zu der Verfestigten Regalwulst (92) laminiert wird.

8. Verfahren nach Anspruch 7, wobei das zylindrisch symmetrische Mundstück (12) durch die verfestigte Regalwulst (92) abgekühlt wird, und die Außenseite der nächsten Regalwulst (94), die aus dem zylindrisch symmetrischen Mundstück (12) herauskommt, abgekühlt wird, während sie aus dem zylindrisch symmetrischen Mundstück (12) herauskommt.

9. Verfahren nach Anspruch 1, wobei das fließfähige und verfestigbare Material ausgewählt wird, um eine positive Strangaufweitung von mindestens 1,1 aufzuweisen.

10. Verfahren nach Anspruch 1, wobei die nächste Regalwulst (94) an der verfestigten Regalwulst (92) in einer senkrechten Position im Verhältnis zu der verfestigten Regalwulst (92) über der gewünschten endgültigen Position laminiert wird.

11. Verfahren nach Anspruch 10, wobei das Abkühlen ferner das Nachgeben der nächsten Regalwulst (94) im Verhältnis zu der verfestigten Regalwulst (92) umfasst, wodurch die senkrechte Dimension (10) der nächsten Regalwulst (94) im Verhältnis zu der seitlichen Dimension (40) der nächsten Regalwulst (94) vergrößert wird und eine senkrechte Position der nächsten Regalwulst (94) auf eine gewünschte Endposition absinkt.

12. Verfahren nach Anspruch 1, wobei die verfestigte Nabenwulst (34) eine geschlossene Schleife ist.

13. Verfahren nach Anspruch 12, wobei die Regalwulst (92) innerhalb der verfestigten Nabenwulst (34) abgeschieden wird.

14. Verfahren nach Anspruch 12, wobei die Regalwulst (92) außerhalb der verfestigten Nabenwulst (34) abgeschieden wird.

15. Verfahren nach Anspruch 1, wobei ein Teil des senkrecht abgestützten Bereichs (90) ein zuvor verfestigtes Stützmaterial umfasst, wobei das Stützmaterial in das dreidimensionale Objekt integriert ist, um eine Abstützung für die Nabenwulst (34) bereitzustellen.

16. Verfahren nach Anspruch 1, wobei die Regalwulst (92) sowohl über einem senkrecht abgestützten Bereich (90) als auch über einem senkrecht nicht abgestützten Bereich abgeschieden wird.

17. Verfahren nach Anspruch 16, wobei ein Teil des senkrecht abgestützten Bereichs (90) ein zuvor verfestigtes Stützmaterial umfasst, wobei das Stützmaterial in das dreidimensionale Objekt integriert ist, um eine Abstützung für stärker gekrümmte Bereiche der Regalwulst (92) bereitzustellen.

18. Verfahren nach Anspruch 15 oder 17, wobei ein Teil des zuvor verfestigten Stützmaterials mit Perforationen (110) gebildet ist, wodurch das zuvor verfestigte Stützmaterial mühelos zu entfernen ist, wenn das dreidimensionale Objekt fertiggestellt ist.

19. Verfahren nach Anspruch 1, wobei das Abkühlen der Regalwulst (92) das Blasen von Luft auf die Regalwulst (92) umfasst, um die Abkühlungsgeschwindigkeit zu verbessern.

## Revendications

1. Procédé de formation d'un élément soutenu latéralement (80) d'un objet tridimensionnel en extrudant séquentiellement des cordons adjacents d'un matériau liquide et solidifiable, l'élément soutenu latéralement (80) comprenant une série de cordons adjacents et latéralement décalés, chaque cordon ayant une dimension verticale (10) et une dimension latérale (40), une partie de l'élément soutenu latéralement (80) recouvrant une région soutenue verticalement (90), le procédé comprenant les étapes consistant à :
a) lamifier verticalement un cordon moyeu (34) sur la région soutenue verticalement (90) ;
b) refroidir le cordon moyeu (34) pour former un cordon moyeu (34) solidifié ;
c) lamifier latéralement un cordon support (92) sur le cordon moyeu (34) solidifié, le cordon support (92) adhérant de manière adjacente et latéralement décalée par rapport au cordon moyeu (34) solidifié et ayant une dimension verticale (10) au moins 10 % plus grande que sa dimension latérale (40) ;
d) refroidir le cordon support (92) pour former un cordon support (92) solidifié ;
e) lamifier latéralement un cordon support suivant (94) sur le cordon support (92) solidifié, le cordon support suivant (94) adhérant de manière adjacente et latéralement décalée par rapport au cordon support (92) solidifié et ayant une dimension verticale (10) au moins 10 % plus grande que sa dimension latérale (40), dans lequel il y a une superposition d'empreinte (42) entre le cordon support suivant (94) et le cordon support (92) solidifié, la superposition d'empreinte (42) étant supérieure à 5 % et inférieure à 30 % de la dimension latérale (40) du cordon support suivant (94) ; et
f) répéter les étapes d) et e) jusqu'à ce que l'élément supporté latéralement (80) soit achevé.

2. Procédé selon la revendication 1, dans lequel la dimension verticale (10) du cordon support (92) solidifié est entre 15 % et 50 % plus grande que la dimension latérale (40) du cordon support (92) solidifié.

3. Procédé selon la revendication 1, dans lequel les cordons de matériau liquide et solidifiable sortent d'une extrémité cylindriquement symétrique (12).

4. Procédé selon la revendication 3, dans lequel l'extrémité cylindriquement symétrique (12) comporte une partie extérieure (50), une partie de la partie extérieure (50) de l'extrémité cylindriquement symétrique (12) s'appariant mécaniquement avec le cordon support (92) solidifié.

5. Procédé selon la revendication 4, dans lequel la lamification d'un cordon support suivant (94) sur un cordon support (92) solidifié comprend en outre la mise en contact d'un cordon support (92) solidifié avec la partie d'appariement mécanique de la partie extérieure de l'extrémité cylindriquement symétrique (12), moyennant quoi l'extrémité cylindriquement symétrique (12) est refroidie par le cordon support (92) solidifié et l'extérieur du cordon support suivant (94) sortant de l'extrémité cylindriquement symétrique (12) est refroidi alors qu'il sort de l'extrémité cylindriquement symétrique (12).

6. Procédé selon la revendication 5, dans lequel l'extrémité cylindriquement symétrique (12) comporte une section amont thermorésistante (70), qui résiste au flux de chaleur vers l'extrémité (12).

7. Procédé selon la revendication 4, dans lequel la lamification d'un cordon support suivant (94) sur un cordon support (92) solidifié comprend en outre la mise en contact et le décalage d'une position du cordon support (92) solidifié avec la partie d'appariement mécanique de la partie extérieure (50) de l'extrémité cylindriquement symétrique (12), moyennant quoi le cordon support suivant (94) est lamifié à une position latérale et verticale souhaitée par rapport au cordon support (92) solidifié.

8. Procédé selon la revendication 7, dans lequel l'extrémité cylindriquement symétrique (12) est refroidie par le cordon support (92) solidifié et l'extérieur du cordon support suivant (94) sortant de l'extrémité cylindriquement symétrique (12) est refroidi alors qu'il sort de l'extrémité cylindriquement symétrique (12).

9. Procédé selon la revendication 1, dans lequel le matériau liquide et solidifiable est choisi pour avoir un gonflement en sortie de filière positif d'au moins 1,1.

10. Procédé selon la revendication 1, dans lequel le cordon support suivant (94) est lamifié sur le cordon support (92) solidifié à une position verticale par rapport au cordon support (92) solidifié au-dessus de la position finale souhaitée.

11. Procédé selon la revendication 10, dans lequel le refroidissement comprend en outre l'affaissement du cordon support suivant (94) par rapport au cordon support (92) solidifié, moyennant quoi la dimension verticale (10) du cordon support suivant (94) est augmentée par rapport à la dimension latérale (40) du cordon support suivant (94), et une position verticale du cordon support suivant (94) tombe à une position finale souhaitée.

12. Procédé selon la revendication 1, dans lequel le cordon moyeu (34) solidifié est une boucle fermée.

13. Procédé selon la revendication 12, dans lequel le cordon support (92) est déposé à l'intérieur du cordon moyeu (34) solidifié.

14. Procédé selon la revendication 12, dans lequel le cordon support (92) est déposé à l'extérieur du cordon moyeu (34) solidifié.

15. Procédé selon la revendication 1, dans lequel une partie de la région soutenue verticalement (90) comprend un matériau de support solidifié au préalable, le matériau de support étant incorporé dans l'objet tridimensionnel pour fournir un support au cordon moyeu (34).

16. Procédé selon la revendication 1, dans lequel le cordon support (92) est déposé à la fois sur une région soutenue verticalement (90) et sur une région non soutenue verticalement.

17. Procédé selon la revendication 16, dans lequel une partie de la région supportée verticalement (90) comprend un matériau de support solidifié au préalable, le matériau de support étant incorporé dans l'objet tridimensionnel pour fournir un support pour les régions à grande courbure du cordon support (92).

18. Procédé selon les revendications 15 ou 17, dans lequel une partie du matériau de support solidifié au préalable comporte des perforations (110), moyennant quoi le matériau de support solidifié au préalable peut être facilement retiré lorsque l'objet tridimensionnel est achevé.

19. Procédé selon la revendication 1, dans lequel le refroidissement du cordon support (92) comprend le soufflage d'air sur le cordon support (92) pour améliorer la vitesse de refroidissement.
